Europäisches Patentamt

(19) European Patent Office

Office européen des brevets

(11) Numéro de publication: **0 080 063**
**B1**

(12) **FASCICULE DE BREVET EUROPEEN**

(45) Date de publication du fascicule du brevet:
**27.12.85**

(21) Numéro de dépôt: **82109624.5**

(22) Date de dépôt: **19.10.82**

(51) Int. Cl.⁴: **B 65 G 57/18**

(54) Procédé et installation de mise en paquets de tuyaux en fonte à emboîtement.

(30) Priorité: **20.11.81 FR 8121931**

(43) Date de publication de la demande:
**01.06.83 Bulletin 83/22**

(45) Mention de la délivrance du brevet:
**27.12.85 Bulletin 85/52**

(84) Etats contractants désignés:
**AT CH DE GB IT LI**

(56) Documents cités:
**DE - A - 2 708 925**
**FR - A - 1 367 018**
**GB - A - 2 026 973**
**US - A - 3 338 427**
**US - A - 3 941 639**

(73) Titulaire: **PONT-A-MOUSSON S.A., 91, Avenue de la Libération, F-54017 Nancy (FR)**

(72) Inventeur: **Malivoir, Roger, 21 Pré Hayer, F-54700 Pont à Mousson (FR)**
Inventeur: **Mayer, Gilbert, 74 rue de la République, F-54000 Nancy (FR)**

(74) Mandataire: **Weil, Roger et al, c/o Centre de Recherches de Pont-à-Mousson BP 28, F-54700 Pont-à-Mousson (FR)**

BUNDESDRUCKEREI BERLIN

**0 080 063**

## Description

La présente invention est relative à un procédé et à une installation pour la confection de paquets de tuyaux en fonte à emboîtement disposés tête-bêche, chaque paquet comprenant un nombre pair ou impair de lits superposés de tuyaux de même diamètre, et chaque lit un nombre pair ou impair de tuyaux.

Dans de tels paquets, les tuyaux soit disposés tête-bêche aussi bien horizontalement (sur chaque lit) que verticalement, entre lits superposés, un emboîtement d'un tuyau alternant avec un bout uni d'un tuyau voisin à chaque extrémité d'un lit.

L'invention s'applique à des tuyaux de différents diamètres, par exemple compris entre 60 et 300 mm, étant entendu que pour des tuyaux de diamètres supérieurs à 300 mm, il faudrait adapter certains moyens de manutention.

La Demanderesse s'est posé le problème de confectionner rapidement et sans temps morts des paquets de tuyaux au fur et à mesure de leur amenée sur un transporteur horizontal par lits successifs, presque sans arrêts, c'est-à-dire par vagues successives séparées par de brèves interruptions, de l'ordre de 2 à 3 secondes ou centièmes de minute, les tuyaux arrivant de la fabrication à une cadence rapide variant d'ailleurs suivant les diamètres, par exemple de 400 par heure pour des tuyaux de diamètre 150 mm.

Plus précisément, le problème est d'empiler rapidement et sans temps morts des lits succussifs de tuyaux à mettre en paquets sur un chariot unique d'évacuation placé en bout d'un transporteur horizontal de lits de tuyaux, avec le minimum d'encombrement au sol, donc sans avoir recours à un carrousel de chariots venant recevoir chacun à leur tour leurs lits de tuyaux à un poste de chargement en bout dudit transporteur, ni avoir recours à une paire de chariots d'évacuation de paquets dont l'un serait en cours de chargement pendant que l'autre serait évacué avec son paquet de tuyaux pour la pose et le serrage des liens du paquet. On imagine en effet qu'un chargement direct d'un chariot unique d'évacuation de tuyaux empilés à lier en paquets serait trop lent en raison de l'éloignement du chariot unique d'évacuation pendant que des tuyaux seraient en attente de chargement à l'extrémité du transporteur horizontal.

Ce problème est partiellement résolu par le brevet FR-A-1 367 018 qui concerne une machine à botteler des tubes en bottes ou paquets en forme de prismes droits à base hexagonale, les paquets étant entourés de liens.

Cette machine comporte notamment un berceau verticalement mobile qui reçoit des lits successifs de tubes déplacés perpendiculairement à leurs axes, et qui, au cours d'une descente verticale, et en coopération avec un bord vertical d'une plaque fixe, dépose un paquet de tubes sur un support hexagonal mobile, qui se trouve à l'arrêt, en position située juste au-dessous dudit berceau.

Le brevet FR-A-1 367 018 n'envisage que des tubes ou objets cylindriques sans emboîtement. De plus, le support hexagonal mobile revecant du berceau à descente verticale un paquet de tubes à ligaturer se déplace transversalement aux axes des tubes. Il en résulte qu'il n'y a pas de problème de saillie des emboîtements ni de collision des emboîtements avec le berceau, lors de l'évacuation du paquet par le support hexagonal mobile.

Par ailleurs, la demande de brevet DE-A-2 708 925 décrit une machine à confectionner des paquets de tubes sans emboîtement, à ligaturer en forme de prismes droits à base hexagonale. Les tubes sont amenés couche par couche, c'est-à-dire par lits successifs, sur un berceau mobile suivant une direction oblique par rapport à la verticale. Ce berceau comporte des rouleaux d'appui obliques formant deux côtés d'hexagone. Dans sa descente oblique, ce berceau coopère avec un guide fixe oblique pour former un demi-hexagone. Le paquet hexagonal formé sur le berceau, en combinaison avec un rail supérieur de guidage, horizontal et escamotable, est disposé sur un transporteur à rouleaux où il est ligaturé. Puis, il est évacué dans une direction parallèle aux axes des tubes.

Dans cette demande de brevet DE-A-2 708 925, la descente oblique du berceau au moyen d'appuis fixes et obliques de guidage est nécessitée par la forme hexagonale des paquets à confectionner.

Il n'y a pas non plus de problème de saillie des emboîtements ni de collision des emboîtements avec les rouleaux obliques d'appui du berceau lors de l'évacuation du paquet de tubes sur le transporteur à rouleaux, hors du berceau. Dans cette demande de brevet, les rouleaux obliques d'appui appartenant au berceau servent à guider l'évacuation du paquet sur le transporteur à rouleaux.

L'invention utilise, comme connu par ces brevets antérieurs, un berceau intermédiaire mobile en hauteur pour recevoir un empilement de lits de tuyaux en attente de chargement sur un chariot d'évacuation vers un poste de ligature du paquet puis vers la sortie.

Ce berceau intermédiaire est placé au-dessus de l'emplacement du chariot d'évacuation lorsqu'il est au poste de chargement, et descend vers ce chariot d'évacuation pour y déposer un paquet de tuyaux que le chariot ou véhicule d'évacuation emmène vers ledit poste de ligature, dans une direction parallèle aux axes des tuyaux à emboîtement. Pour maintenir en place un paquet des tuyaux, le berceau et le véhicule d'évacuation sont pourvus de dossiers d'appui du paquet.

Or, pour résoudre le problème précité de confection rapide de tuyaux d'emboîtement, le problème de la saillie des emboîtements de tuyaux par rapport aux dossiers d'appui du berceau intermédiaire reste posé, en raison du risque de collision des emboîtements de tuyaux avec les dossiers d'appui du

2

berceau intermédiaire lorsque les tuyaux sont chargés sur le traîneau qui les évacue: en effet, une simple descente verticale du berceau intermédiaire en-dessous du traîneau pour transférer le paquet de tuyaux du berceau intermédiaire au traîneau ne permet pas d'escamoter les dossiers d'appui du berceau intermédiaire hors du passage des emboîtements lors de la course transversale du traîneau d'évacuation.

Ce problème est résolu par la présente invention.

A cet effet, la présente invention a pour objet un procédé pour la confection de paquets carrés ou rectangulaires de tuyaux en fonte, à emboîtement, disposés tête-bêche, une extrémité de tuyau à bout uni alternant avec une extrémité à emboîtement d'un tuyau voisin, en partant de tuyaux amenés par un transporteur horizontal ou à peu près, suivant une direction perpendiculaire aux axes des tuyaux pour aboutir à un paquet de tuyaux évacué par un véhicule, suivant une direction parallèle aux axes des tuyaux, ce procédé du type dans lequel on empile des lits successifs de tuyaux en un paquet sur un berceau intermédiaire qui maintient le paquet non lié par un côté; on transfère le paquet de tuyaux empilés mais non liés du berceau intermédiaire vers un véhicule d'évacuation du paquet placé au-dessous dudit berceau intermédiaire en faisant descendre obliquement le berceau intermédiaire au-dessous du véhicule d'évacuation qui retient le paquet au passage et qui maintient le paquet non lié par le même côté que le berceau, l'angle d'inclinaison de la descente par rapport à la verticale ménageant un espace libre entre le berceau intermédiaire et le paquet de tuyaux transféré sur le véhicule d'évacuation; on déplace le véhicule d'évacuation contenant un paquet de tuyaux suivant une direction parallèle aux axes des tuyaux du paquet vers une machine à cercler le paquet, l'espace libre susdit étant suffisant pour permettre le déplacement du véhicule d'évacuation d'un paquet de tuyaux sans collision des emboîtements avec le berceau intermédiaire; on relève le berceau intermédiaire en position haute de réception de nouveaux lits successifs de tuyaux avant même le retour du véhicule d'évacuation en position d'attente de chargement.

Ainsi, pour éviter la collision précitée, l'invention prévoit une mobilité en hauteur du berceau intermédiaire relativement au véhicule d'évacuation suivant une direction oblique par rapport à la verticale.

Grâce à cette obliquité, lorsque le berceau intermédiaire descend au-dessous du véhicule d'évacuation pour décharger son paquet de tuyaux sur celui-ci, il éloigne ses propres dossiers d'appui du trajet ou passage des emboîtements de tuyaux lors de l'évacuation dudit véhicule.

L'invention a également pour objet une installation pour la mise en œuvre du procédé ci-dessous.

L'installation de l'invention est, comme révélé par FR-A-1 367 018, du type à transporteur horizontal ou à peu près horizontal de lits de tuyaux et à moyens de chargement de ces lits, en bout dudit transporteur, sur un véhicule d'évacuation à dossiers, d'appui, et du type dans lequel lesdits moyens de chargement sur le véhicule unique d'évacuation d'un paquet de tuyaux consistent en une pelle pour prélever les lits de tuyaux sur le transporteur et un berceau intermédaire à dossiers d'appui pour recevoir les lits de tuyaux de la pelle et les transférer sur le véhicule unique, le berceau étant mobile en hauteur relativement au véhicule d'évacuation entre une position haute au-dessus et une position basse au-dessous de celui-ci. L'installation selon l'invention se caractérise en ce que les dossiers d'appui tant du véhicule que du berceau sont disposés d'un seul et même côté du paquet de tuyaux qui sont en fonte à emboîtement dis posés tête-bêche, que le véhicule- est mobile transversalement à la direction de déplacement des lits de tuyaux sur ledit transporteur, et que le berceau est mobile le long d'un chemin de roulement oblique à inclinaison d'angle par rapport à la verticale, ledit chemin de roulement étant à pente descendante dans le sens de l'approche du berceau vers le véhicule d'évacuation du paquet de tuyaux lorsque le berceau et au-dessus du véhicule, et dans le sens de l'éloignement du berceau lorsque le berceau est au-dessous du véhicule, les positions du berceau au-dessus et au-dessous du véhicule étant telles que les dossiers d'appui du berceau soient écartés de ceux du véhicule respectivement en-deçà et au-delà.

Ainsi, pour transférer les lits de tuyaux du transporteur horizontal au berceau intermédiaire, une pelle à trajectoire fermée est utilisée.

D'autres caractéristiques et avantages, notamment sur la pelle, le berceau, et le véhicule d'évacuation, apparaîtront au cours de la description qui va suivre.

Au dissin annexé donné uniquement à titre d'exemple,

la Fig. 1 est une vue schématique en perspective d'une installation suivant l'invention;

la Fig. 2 est une vue en perspective d'un paquet de tuyaux à obtenir;

la Fig. 3 est une vue schématique en élévation, à petite échelle, de l'installation de l'invention avec un paquet de tuyaux prêts à être chargés sur un chariot d'évacuation;

la Fig. 4 est une vue partielle en plan correspondant à la Fig. 3;

la Fig. 5 est une vue partielle en élévation du chariot d'évacuation venant de recevoir son chargement de tuyaux en paquet;

la Fig. 6 est une vue en élévation correspondant à la Fig. 3 de l'installation en cours de confection d'un paquet de tuyaux;

la Fig. 7 est une vue latérale par rapport à la Fig. 3 et à même échelle que celle-ci illustrant la pelle, le berceau et le chariot au poste de chargement des tuyaux;

la Fig. 8 est une vue schématique en plan correspondant à la Fig. 7;

la Fig. 9 est une vue schématique partielle de détail à plus grande échelle que la Fig. 6 illustrant la pelle, le berceau et le chariot lors de l'empilement de lits de tuyaux sur le berceau;

la Fig. 10 est une vue schématique partielle correspondant à la Fig. 9, illustrant la trajectoire oblique de transfert du tuyau du berceau au chariot lors de la descente du berceau;

la Fig. 11 est une vue analogue aux Fig. 9 et 10 et correspondant à la Fig. 5, illustrant un paquet de tuyaux chargés sur le chariot ainsi que le berceau en position basse livrant passage au chariot pour sa course transversale d'évacuation.

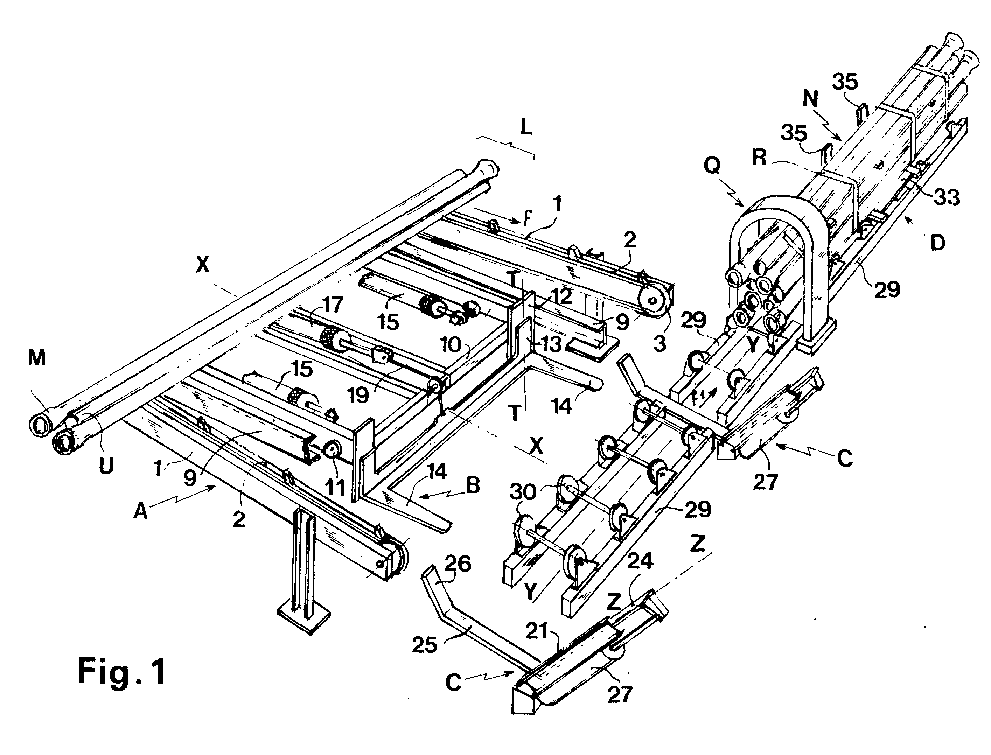

## Description générale de l'installation (Fig. 1 à 5)

Suivant l'exemple d'exécution des Fig. 1 à 5, l'installation de l'invention est appliquée à la confection et à l'évacuation de paquets de tuyaux T en fonte, à emboîtement, liés par des rubans R métalliques (feuillards) ou plastiques au moyen d'une machine à cercler Q de type connu, disponible dans le commerce, très sommairement et schématiquement représentée à la Fig. 1.

Comme connu, les tuyaux T sont disposés en lits superposés L constituant un empilage ou un paquet. Horizontalement sur chaque lit L et verticalement entre deux lits superposés, ils sont disposés tête-bêche, un emboîtement M d'un tuyau alternant avec un bout uni U d'un tuyau voision, afin de réduire l'encombrement de chaque paquet.

L'invention est applicable à la confection de paquets de tuyaux de fonte de diamètres allant par exemple de 60 mm à 300 mm, les tuyaux d'un même paquet ayant le même diamètre. Chaque paquet est composé d'un nombre pair ou impair de lits L de tuyaux T. Chaque lit comprend un nombre pair ou impair de tuyaux T.

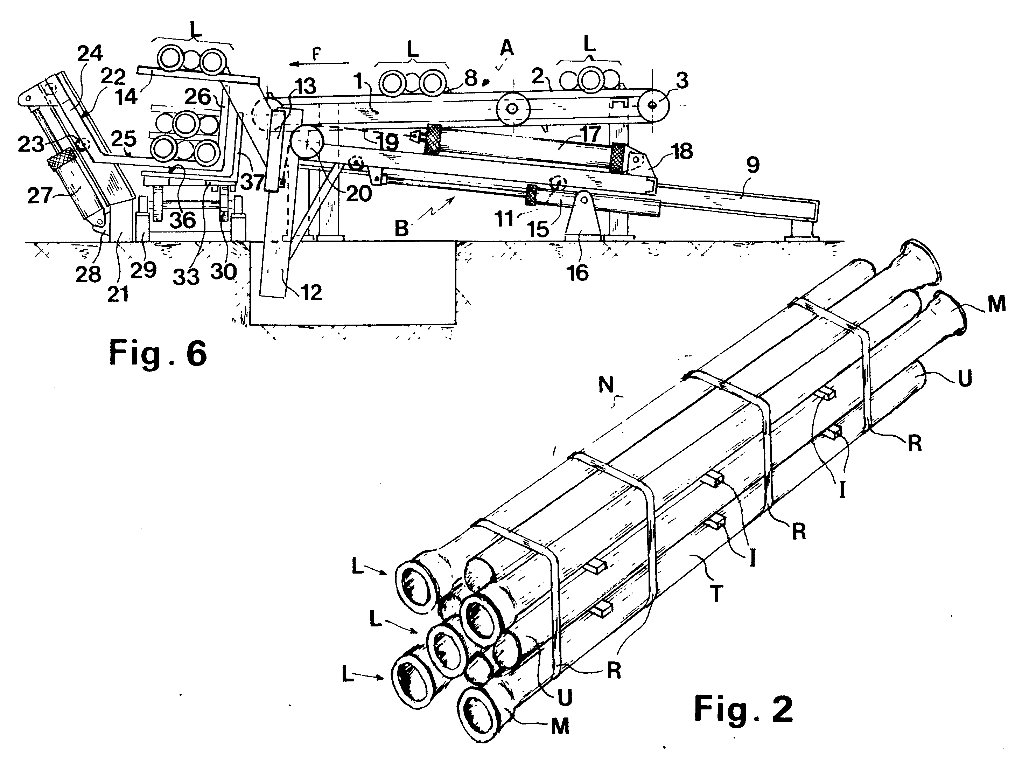

Dans l'exemple de la Fig. 2, chaque paquet comprend trois lits de trois tuyaux de diamètre 150 mm. On remarque encore à la Fig. 2 des cales de bois I ou autre matériau analogue, intercalées entre les lits L en vue de parfaire leur immobilisation à l'intérieur de chaque paquet. Les cales I sont disposées transversalement par rapport à la longueur des tuyaux T qui est par exemple de l'ordre de 6 m.

Sur toutes les figures, pour simplifier le dessin, les lits n'ont été représentés qu'avec trois tuyaux.

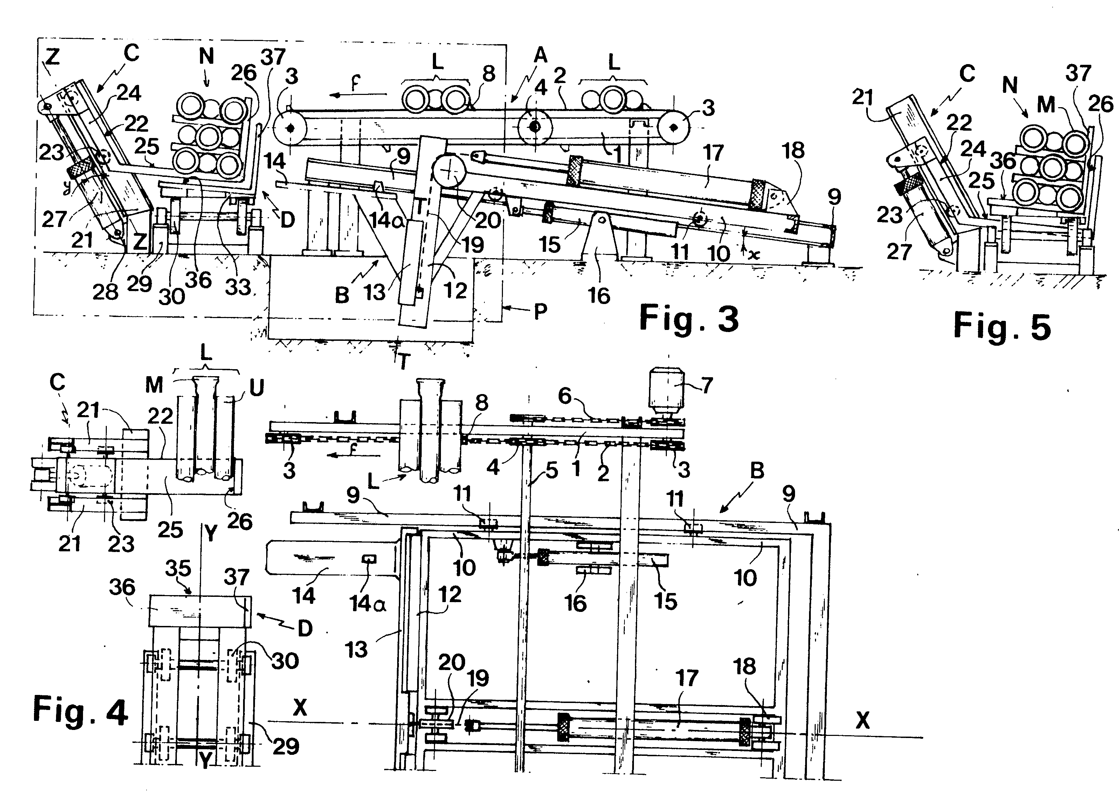

L'installation de l'invention comporte les éléments suivants (Fig. 3):

— un transporteur horizontal A de lits L de tuyaux vers une pelle B,
— une pelle B de chargement de lits L de tuyaux T sur un berceau mobile intermédiaire C entre la pelle B et un chariot ou véhicule ou traîneau D, et au-dessous de l'extrémité aval du transporteur A, lorsqu'elle est en position de repos,
— un berceau intermédiaire C, récepteur de lits L de tuyaux T pour la confection de paquets de tuyaux non liés et leur chargement sur un chariot ou véhicule ou traîneau D,
— un chariot ou traîneau D recevant un paquet non lié de tuyaux T pour les évacuer, c'est-à-dire les faire sortir de l'installation en passant par une machine à lier ou à cercler Q, du commerce, non décrite mais représentée très sommairement à la Fig. 1.

La pelle B, le berceau C et le traîtneau D sont concentrés et même imbriqués en certains positions à l'intérieur d'un périmètre rectangulaire P offrant ainsi l'encombrement minimum.

Le transporteur horizontal A a une direction générale de déplacement XX (Fig. 4) alors que le traîneau D a une direction horizontale de déplacement YY orthogonale à la direction XX (Fig. 4).

La pelle B, qui est élévatrice, a une direction de déplacement T—T montante et descendante, légèrement inclinée par rapport à la verticale d'un angle x, donc oblique dans un plan vertical parallèle à l'axe XX et perpendiculaire à l'axe YY.

Le berceau C est mobile suivant une direction ZZ oblique, c'est-à-dire inclinée d'un angle y par rapport à la verticale et situé dans un plan vertical parallèle à l'axe XX, donc perpendiculaire à l'axe YY. Il est lui-même incliné par ses surfaces portantes et d'appui du même angle x que la pelle B. L'angle y est nettement supérieur à l'angle x afin d'éloigner suffisamment le berceau C du traîneau D dans la descente du berceau C, pour permettre l'évacuation des paquets de tuyaux non liés, sans collision avec le berceau.

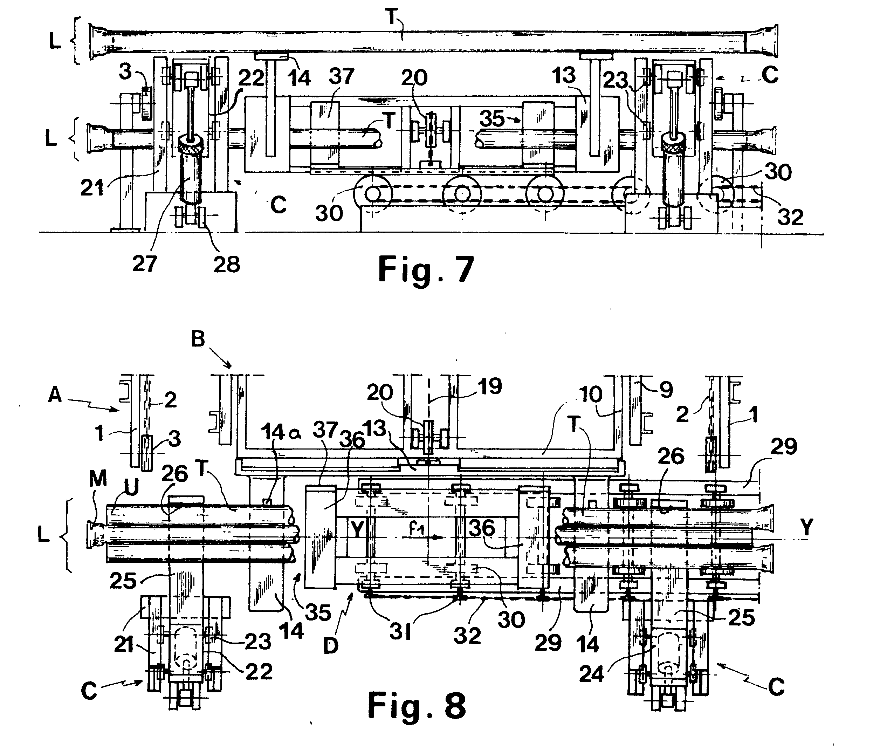

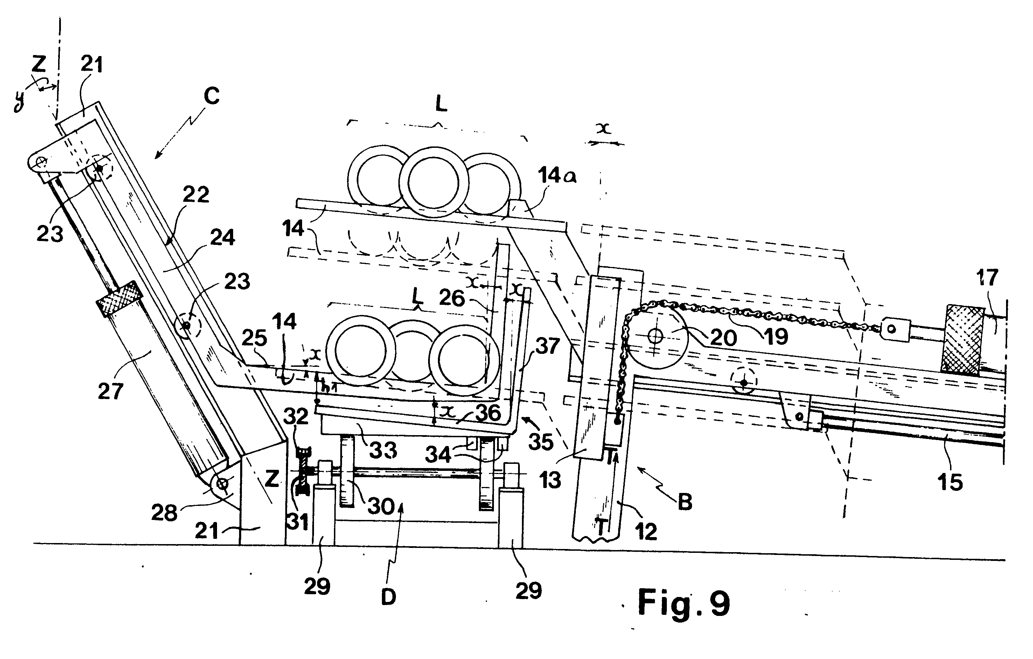

La pelle élévatrice B est mobile entre un emplacement situé au-dessous du transporteur horizontal A (Fig. 3) et un emplacement situé au-dessus du berceau C et du traîneau D (Fig. 6 et 9).

Le berceau C de chargement du traîneau D est mobile entre un emplacement situé au-dessus du traîneau D (Fig. 3, 6 et 9) et un emplacement situé au-dessous du traîneau D (Fig. 5, 10 et 11).

Le traîneau D est également incliné par ses surfaces portantes et d'appui du même angle x précité, pour des raisons de stabilité du chargement de tuyaux.

**0 080 063**

### Description détaillée

### Transporteur horizontal A (Fig. 1 et 4)

Il comporte un bâti 1 admettant comme plan de symétrie un plan vertical passant par l'axe horizontal XX qui est la direction générale de déplacement du transporteur A. Le bâti 1, convenablement entretoisé, porte un convoyeur 2 constitué d'une paire de chaînes sans fin symétriques par rapport au plan vertical passant par l'axe XX et espacées d'une distance nettement inférieure à la longueur d'un fût de tuyau T, c'est-à-dire nettement inférieure à la longueur totale d'un tuyau diminuée de la longueur de l'emboîtement M. Les chaînes 2 du convoyeur passent sur des roues dentées d'extrémité 3 et sont entraînées en mouvement de translation continu, parallèlement à la direction XX, par exemple à vitesse variable, en synchronisme, par une paire de roues dentées de synchronisation 4 placées sur le même arbre 5 transversal à la direction XX et parallèles à la direction générale des tuyaux T posés sur le transporteur A.

Les roues de synchronisation 4 sont elles-mêmes entraînées par une chaîne sans fin 6 motrice mue par un moteur 7 à vitesse variable. Les chaînes transporteuses 2 sont en outre munies de dents 8 d'entraînement des tuyaux T convenablement espacées d'intervalles correspondant à la longueur maximale d'un lit L.

Les chaînes du convoyeur 2, se déplaçant de manière appropriée, en continu ou par à-coups, par exemple à vitesse variable convenablement réglée en fonction des nécessités de chargement des tuyaux, sont destinées à recevoir des lits de tuyaux L confectionnés en amont d'une manière connue et non représentée, par exemple en les déposant individuellement, tête-bêche, à l'aide d'un appareil de levage sur le brin supérieur des chaînes 2. Chaque lit L est ainsi poussé en direction du berceau C par les dents 8 sur lesquelles est appuyé chaque tuyau T situé en arrière de chaque lit en considérant comme sens de marche avant du transporteur A celui de la flèche f parallèle à l'axe XX, et dirigée vers le berceau C.

### Pelle élévatrice B de chargement du berceau C
### (Fig. 1 et 3 à 9)

La pelle B est montée sur un bâti 9 à longerons parallèles au plan de symétrie de l'installation passant par l'axe XX et au-dessous et à l'intérieur des longerons du bâti 1 au transporteur A avec une légère inclinaison montante d'un angle x par rapport à l'horizontale. Les longerons 9 sont donc montants dans le sens de la flèche f d'avance des lits de tuyaux L sur le transporteur A. Sur les longerons 9 formant un chemin de roulement est susceptible de rouler un véhicule ou chariot 10 au moyen de galets 11. Le chariot 10 porte un châssis 12 appartenant à la pelle proprement dite. Le châssis 12 porte une glissière de guidage de la pelle suivant la direction TT de montée et de descente de la pelle qui est légèrement inclinée de l'angle x par rapport à la verticale. Sur le châssis 12 peut coulisser un coulisseau 13 portant la pelle B proprement dite, du type à »fourche de chariot de manutention«, constitué par une paire de bras porteurs ou palettes 14 espacés d'une distance inférieure à la longueur des fûts des tuyaux T transportés et inférieure à l'espacement des longerons du bâti 9, donc sensiblement inférieure à l'espacement des chaînes 2 du transporteur A. La pelle B à bras 14 est orientée perpendiculairement au châsssis 12 et à son coulisseau 13 suivant un plan de support concrétisé par les bras 14 qui font donc un angle x avex l'horizontale pour la stabilité du chargement de tuyaux. En d'autres termes, la pelle B est légèrement oblique par rapport à l'horizontale, dans le sens descendant vers son châssis 12. En outre, la pelle B porte à l'extrémité de chacun de ses bras 14, près du châssis 12, une paire de dents 14a d'un lit de tuyaux L. Chaque bras porteur 14 a donc une dimension suffisante pour recevoir un lit L.

La pelle B est susceptible de se déplacer en va et vient sur les longerons 9 et de monter et descendre en coulissant sur le châssis 12 de manière à transférer un lit L de tuyaux sur le berceau C et à revenir au point de départ sous le transporteur A.

A cet effet, pour son déplacement en translation sur les longerons 9, la pelle B est mue par un vérin 15 articulé sur un support 16, dont l'extrémité de tige de piston est solidaire du chariot 10.

Pour la montée et la descente, le coulisseau 13 de la pelle B est mû par un vérin 17 articulé sur un support 18 solidaire du chariot 10. Le vérin 17 porte à l'extrémité de tige de piston une chaîne de traction 19 (de type chaîne Galle) qui est accrochée à la partie inférieure du coulisseau 13, après changement de direction à 90° autour d'une poulie ou roue dentée 20 sur laquelle elle passe suivant un arc de circonférence de 90°.

## Le berceau intermédiaire C de chargement du traîneau D
### (Fig. 1 et 3 à 11)

Il est à claire-voie.

Il se compose d'un bâti 21 à deux montants inclinés suivant la direction oblique ZZ faisant un angle y par rapport à la verticale et servant de chemins de roulement à une paire de supports parallèles rigides et coudés 22 constituant le berceau proprement dit et se déplaçant en synchronisme. Les supports coudés 22 sont symétriques par rapport ou plan de symétrie de l'installation passant par l'axe XX.

Les supports 22 sont munis de galets de roulement 23 pour se déplacer sur le bâti 21. Le synchronisme de déplacement des supports coudés 22 est assuré par des moyens hydrauliques connus et non représentés. Les supports coudés 22 se déplacent entre une position supérieure située au-dessus du traîneau D et une position inférieure située au-dessous du traîneau D. Les supports ou bras coudés 22 forment les trois côtés d'un quadrilatère en auge trapézoïdale capable de recevoir un paquet de tuyaux et sont comparables à des bras humains pliés en position de support d'un paquet encombrant (Fig. 3, 5, 6, 9, 10, 11): En effet les supports 22 comportent:

- un côté 24 ou bras oblique, suivant la direction ZZ, de grande hauteur, portant les galets 23, de hauteur sensiblement supérieure à celle du transporteur A;
- un deuxième côté ou avant-bras 25 constituant la surface portante ou le siège du berceau, parallèle aux longerons 9 du bâti de la pelle B et aux bras 14 de ladite pelle, donc légèrement oblique suivant un angle x par rapport à l'horizontale. Le siège 25 a une largeur au moins égale à celle du traîneau transversal D d'évacuation.
- enfin, un troisième côté ou une main 26 ou dossier d'appui perpendiculaire au siège 25 et parallèle au châssis 12, et de hauteur légèrement supérieure à celle du transporteur A. Le dossier 26 est donc incliné d'un angle x par rapport à la verticale.

Pour la montée et la descente du berceau mobile C le long du bâti oblique 21, chaque support coudé 22 est mû par un vérin 27 articulé en 28 sur un support fixé au sol et solidaire de l'extrémité de la tige de piston du vérin 27. Les deux vérins 27 sont hydrauliquement snychronisés par des moyens connus non représentés.

## Traîneau D d'évacuation ou de sortie des paquets de tuyaux non liés
### (Fig. 1 et 3 à 11)

Le traîneau D est un véhicule sans roue, à claire-voie. Le traîneau D est porté par un chemin de roulement à bâti 29 horizontal et transversal par rapport à la direction XX, autour d'un axe de symétrie YY perpendiculaire à l'axe XX. Le bâti 29 porte des galets de support 30 d'axes fixes, horizontaux, parallèles à la direction XX: un véritable train de galets 30 moteurs forment un chemin de roulement transversal pour le traîneau D. Les galets 30 moteurs sont entraînés en synchronisme (Fig. 7 et 8) par exemple par des roues dentées 31 et des chaînes Galle sans fin 32 (sommairement illustrées) mues par des moteurs non représentés, ou encore par tout autre moyen approprié.

C'est grâce à ce train de galets porteurs et moteurs 30 du traîneau D que le traîneau D peut se déplacer transversalement par rapport au berceau C en position inférieure. De plus, le traîneau D peut traverser la machine à cercler Q en aller-retour. Ce serait impossible si les galets 30 étaient portés par le traîneau D qui serait alors un chariot: de ce fait, le chariot automoteur devrait être alimenté en énergie par un câble souple risquant d'être lié par la machine à cercler Q.

Le traîneau D comporte un tablier 33 de support à clairevoie qui est porté par les galets 30 et guidé sur ceux-ci par une paire de barres de guidage 34 suituées de part et d'autre des galets 30, mais prévues d'un seul côté de la voie de roulement (Fig. 3 et 9). Le tablier 33 porte à ses extrémités une paire d'équerres 35 de support et d'appui d'un paquet de tuyaux, chaque équere 35 étant inclinée du même angle x que les surfaces portantes et d'appui de la pelle B et du berceau C. Chaque équerre 35 comporte donc deux côtés, l'un 36 constituant la surface portante ou le siège inclinée parallèlement au siège 25 du berceau C, l'autre côté 37 constituant le dossier d'appui d'un paquet de tuyaux, de même inclinaison que le dossier 26 du berceau. Chaque dossier 37 est donc perpendiculaire au siège 36, parallèle au châssis 12 et au coulisseau 13 ainsi qu'au dossier 26 du berceau C. Le traîneau D est non seulement plus court que l'espacement entre les deux bras 14 de la pelle B pour laisser la pelle B monter et descendre à l'extérieur du traîneau D, mais encore sensiblement plus court que l'intervalle ou la distance entre les deux supports coudés 22 du berceau C pour laisser également le berceau C monter et descendre par rapport au traîneau D (Fig. 8).

Le traîneau D est également d'une longueur très inférieure à l'espacement des longerons 1 du transporteur A et par conséquent, a fortiori, très inférieure à la longueur des tuyaux T donc à la longueur d'un paquet pour permettre à la machine à cercler Q de serrer des liens autour du paquet de tuyaux à l'extérieur du traîneau D, de part et d'autre de celui-ci.

Il y a deux positions relatives, dans le sens de la hauteur, entre le berceau mobile C et le traîneau D lorsque celui-ci est en arrêt, en position de chargement en bout du transporteur A:

— une position dans laquelle le berceau C est au-dessus du traîneau D, donc dans laquelle le siège 25 et le dossier 26 du berceau C sont situés à l'intérieur de surfaces imaginaires prolongeant les équerres 35 du traîneau D. En termes plus imagés mais plus sommaires, le berceau C est alors en quelque sorte enveloppé par la silhouette des équerres 35 du traîneau D (Fig. 3, 6, 9);

— et une position inférieure dans laquelle le berceau C se trouve au-dessous du traîneau D, c'est-à-dire dans laquelle les équerres constituées par le siège 25 et le dossier 26 du berceau C sont à l'extérieur des surfaces imaginaires prolongeant les équerres 35 du traîneau D ou enveloppent celles-ci. Il est à noter que dans la position haute du berceau C celui-ci est à faible hauteur $h_1$ au-dessus du siège 36, et dans la position basse le berceau est à une faible hauteur $h_2$ au-dessous du siège 36 du traîneau D, ceci pour des raisons de limitation de course de berceau C, donc d'encombrement.

Le traîneau D se déplace suivant la direction YY entre un emplacement d'arrêt situé en bout du transporteur A et au moins deux emplacements d'arrêt devant la machine à cercler Q, c'est-à-dire à poser et à serrer les liens ou rubans R (Fig. 1) sur les extrémités du paquet de tuyaux T qui dépassent du traîneau D (car il faut évidemment éviter d'attacher le paquet de tuyaux au traîneau D). Le traîneau D est donc animé d'un mouvement de translation alternatif sur le chemin transversal à bâti 29, et suivant l'axe YY.

Les espacements relatifs, vus en plan, entre le transporteur A, la pelle B, le berceau C et le traîneau D sont tels que l'espacement des chaînes 2 porteuses des tuyaux T sur le transporteur A, qui est sensiblement inférieur à la longueur des tuyaux T, est lui-même supérieur à l'espacement des supports coudés 22 du berceau C, lui-même supérieur à l'espacement des bras 14 de la pelle B, lui-même supérieur à la longueur du traîneau D et à l'espacement des équerres 35 de support des tuyaux T.

## Fonctionnement

### 1. Amenée d'un lit de tuyaux sur la pelle B
### (Fig. 1, 3, 4)

On supposera au départ qu'un lit L de tuyaux, par exemple au nombre de trois, disposés tête-bêche, c'est-à-dire en alternant emboîtement M et bout mâle U, est arrivé à l'extrémité aval (par rapport au sens de la flèche f) du transporteur horizontal A sur les brins supérieurs des chaînes sans fin 2. Ce lit de tuyaux L a été déposé sur le transporteur A, à l'amont de celui-ci, par exemple par un appareil de manutention non représenté.

La pelle B est alors en position inférieure d'attente au-dessous du transporteur A (Fig. 3).

Le vérin 17 de montée-descente est actionné de manière à faire monter la pelle B à bras 14 en tirant sur la chaîne 19. La pelle B monte, se rapproche du lit de tuyaux L, arrive juste au-dessous, continue de monter, soulève le lit L au-dessus du transporteur A et l'enlève ainsi en position d'appui contre les dents 14a de ses bras 14. La pelle B s'arrête alors de monter en fin de course de vérin 17, sensiblement au-dessus du transporteur A.

### 2. Amenée d'un lit de tuyaux L sur le berceau C par la pelle B
### (Fig. 1, 6 et 9)

Le berceau C est en position haute, c'est-à-dire sensiblement au-dessus du traîneau D avec un espacement en hauteur $h_1$ entre les sièges 25 du berceau et 36 du traîneau, mais sensiblement au-dessous des bras 14 de la pelle B en position haute. La pelle B est déplacée en direction du berceau C par les vérins 15 d'avance-recul agissant sur le châssis 10 qui roule sur le bâti 9. La pelle B vient ainsi se placer au-delà du transporteur A juste au-dessus du chemin transversal 29 de roulement du traîneau D et juste au-dessus du berceau C. C'est la position extrême de la course des vérins 15 et du châssis 10. Le vérin 17 de montée-descente est alors actionné en sens inverse de manière à relâcher l'effort de traction sur la chaîne 19 et à laisser redescendre la pelle B jusqu'à ce que le lit L de tuyaux repose sur le siège 25 de chaque support coudé 22 du berceau C (Fig. 9). La pelle B continue encore sa descente jus-qu'à fin de course du vérin 17, puis les vérins 15 sont alimentés en sens inverse de manière à faire reculer la pelle B hors de l'espace du berceau C pour la ramener au-dessous du transporteur A (Fig. 3).

Il est à noter qu'après le dépôt du deuxième lit L sur le premier, dans le berceau C, la pelle B peut descendre seulement au niveau du premier lit sans attendre le point bas de la course du vérin 17. De même, après le dépôt du troisième lit L, la pelle B peut arrêter sa descente au niveau du deuxième lit L. Cette variation de la course de descente de la pelle B en fonction du niveau du lit L à déposer sur le berceau C est obtenue par des moyens automatiques connus en soi.

7

### 3. Chargement du berceau C
### (Fig. 3, 6, 9)

La même opération qu'en 2) de va-et-vient de la pelle B entre la position basse et reculée d'attente et de repos au-dessous du transporteur A et la position haute au-dessus du transporteur A, d'abord reculée pour enlever un lit L de tuyaux, puis avancée au-dessus du berceau C et descendue au-dessous du lit précédemment déposé sur le berceau C, puis reculée, est répétée autant de fois, c'est-à-dire trois fois dans le présent exemple, qu'il y a de lits L à charger sur le berceau C. Chaque fois qu'un lit L est déposé sur le berceau C, on pose sur le lit L deux cales intercalaires I, par exemple en bois, perpendiculairement aux fûts, afin de protéger le revêtement des tuyaux T en évitant tout contact direct de leurs parois entre deux lits superposés, et afin d'immobiliser les lits L les uns par rapport aux autres, dans le parquet futur N.

### 4. Déchargement du berceau C sur le traîneau transversal D
### (Fig. 1, 3, 4, 5, 10 et 11)

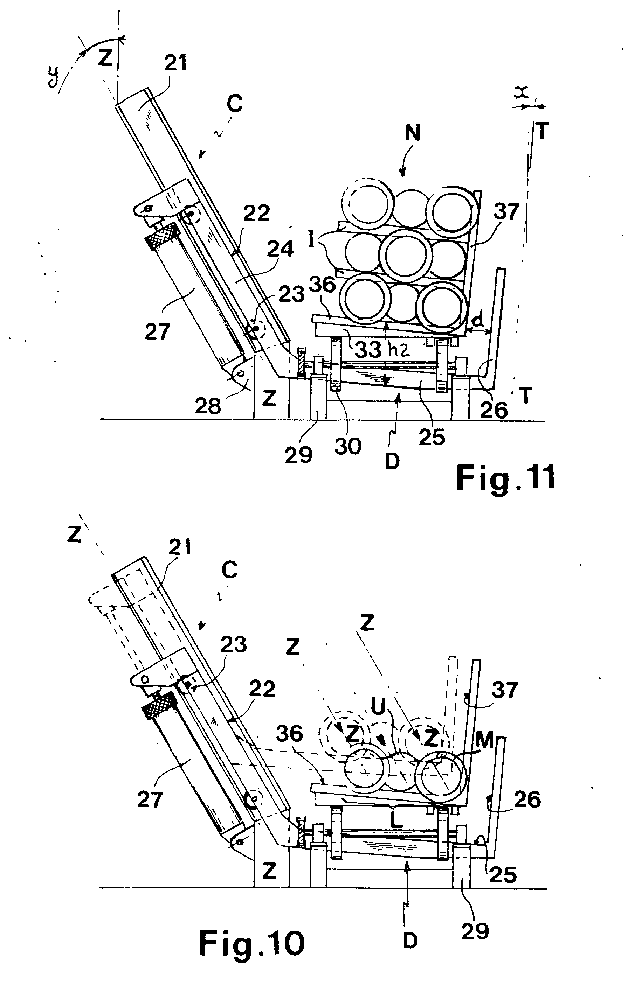

Lorsque le berceau C contient un paquet complet N de tuyaux disposés tête-bêche, c'est-à-dire par exemple trois lits superposés L de trois tuyaux (Fig. 3), les vérins 27 sont actionnés en synchronisme de manière à faire descendre les supports coudés 22 du berceau C suivant la direction oblique ZZ (Fig. 10).

Cette descente du berceau C s'effectue pendant que le traîneau D se trouve en position de réception d'un paquet N de tuyaux, à l'extrémité aval du transporteur A (Fig. 10 et 11).

Les sièges 25 des supports coudés 22 se rapprochent des sièges 36 du traîneau D, descendent à un niveau inférieur à celui des sièges 36 et déposent alors au cours de cette descente le paquet N sur les sièges 36 du traîneau D en appui contre les dossiers 37 (Fig. 5 et 11).

Le berceau C continue de descendre jusqu'à une position inférieur située sensiblement au-dessous du traîneau D, par exemple d'une hauteur $h_2$ séparant les sièges 25 du berceau C des sièges 36 du traîneau D.

Ce faisant, du fait de la descente oblique du berceau C suivant la direction ZZ (angle y), les dossiers d'appui 26 des supports coudés 22 du berceau C s'éloignent des dossiers d'appui 37 du traîneau D d'une distance d et s'écartent ainsi sensiblement des emboîtements des tuyaux T dont les fûts sont en appui contre les dossiers 37 du traîneau D (Fig. 5, 10 et 11). L'angle d'inclinaison y de la direction ZZ doit être suffisant pour qu'à l'abaissement $h_2$ corresponde une distance d sensiblement supérieure à l'espace nécessaire au passage des emboîtements M des tuyaux qui sont en protubérance par rapport aux dossiers 37 lors du déplacement du traîneau D suivant la direction YY et la flèche $f_1$, sans heurter les dossiers 26 du berceau C à l'arrêt.

### 5. Evacuation d'un paquet N de tuyaux par le traîneau D
### (Fig. 1, 5 et 11)

Le berceau C étant en position inférieure, sensiblement au-dessous des sièges 36 du traîneau D, avec un écartement d entre les dossiers 26 de C et 37 de D, la voie est libre pour un déplacement transversal du traîneau D dans le sens de la flèche $f_1$ suivant l'axe YY (Fig. 1 et 8), en vue d'évacuer un paquet N de tuyaux vers la machine Q à cercler sur la voie transversale constituée par le chemin de roulement 29 à galets 30. En effet, les supports coudés 22 du berceau C sont escamotés hors du passage du traîneau D et de ses équerres 35 et hors du passage des emboîtements M des tuyaux du paquet N (Fig. 5 et 11). En particulier, l'un des deux sièges 25 de support 22 du berceau C, celui qui est le plus proche de la machine à cercler Q (à droite de la Fig. 8 et en suivant la flèche $f_1$), étant mobile entre deux paires de galets moteurs 30 dans une échancrure ou une interruption du bâti 29 (Fig. 1 et 8), ne fait nullement obstacle à ce déplacement du traîneau D.

Dès que le traîneau D s'est déplacé hors du prolongement du transporteur horizontal A et plus précisément hors de la zone de déplacement du berceau C, le berceau C remonte en position supérieure au-dessus du passage du traîneau D pour se faire charger le lits successifs, même pendant l'éloignement du traîneau D. Le berceau C, par l'actionnement des vérins 27, reprend donc la position de la Fig. 9 qui, comme on le voit, libère également le passage du traîneau D dans le sens du retour en position de chargement (sens inverse de la flèche $f_1$) puisque les sièges 25 du berceau C se trouvent en position escamotée au-dessus des sièges 36 du traîneau D et que les dossiers d'appui 26 du berceau C se trouvent escamotés en-deça du passage des dossiers d'appui 37 du traîneau D revenant vide, après avoir traversé la machine à cercler Q, et emmené vers l'expédition un paquet de tuyaux convenablement ligaturé par des liens R (Fig. 1).

## Avantages

Il résulte de l'exposé précédent que:

— La confection d'un paquet de tuyaux sur le berceau C, en attente de chargement sur le traîneau D ne s'arrête pas pendant que le traîneau D s'est éloigné transversalement pour emmener un paquet vers la machine Q à poser des liens R autour du paquet N; tout temps mort est évité.

— le berceau intermédiaire C entre la pelle de chargement B et le traîneau D d'évacuation des paquets permet de n'utiliser qu'un seul traîneau D;

— malgré l'espace restreint (périmètre P) dans lequel se trouvent et s'imbriquent la pelle B, le berceau C et le traîneau D, il n'y a nullement interférence dans les déplacements prévus au plus juste en hauteur pour la pelle B et surtout le berceau C relativement au traîneau D;

— la réalisation du véhicule d'évacuation sous forme de traîneau D mobile sur galets moteurs 30 d'axes fixes résout de manière simple le problème de l'entraînement en translation du traîneau D en va et vient au travers de la zone de déplacement du berceau C et au travers de la machine à cercler Q;

— les espacements relatifs des bras 14 de la pelle B des supports coudés 22 du berceau C et des équerres 35 du traîneau D apportent également une solution simple au problème des interférences dans les zones communes de passage;

— la descente oblique suivant la direction ZZ d'angle y des supports coudés 22 du berceau C assure en même temps que l'abaissement ou l'élévation du berceau C au-dessous ou au-dessus du traîneau D, l'éloignement relatif des dossiers 26 d'appui du berceau C par rapport aux dossiers 37 d'appui du traîneau D, ce qui ne serait pas possible si la descente et la montée du berceau C étaient purement et simplement verticales;

— les courses sont minimales tant pour la pelle B que pour le berceau C et le traîneau D;

— l'installation présente le minimum d'encombrement au sol en raison de la concentration de la pelle B, du berceau C et du traîneau D à l'intérieur d'un périmètre rectangulaire verticale P (représenté en trait mixte à la Fig. 3), à la sortie du transporteur A, au cours du chargement des tuyaux;

— enfin, l'installation de l'invention fonctionne de manière très rapide en raison de la concentration de la pelle B, du berceau C et du traîneau D et des faibles courses à parcourir, et de l'absence de temps morts.

## NOMENCLATURE

| | |
|---|---|
| A | transporteur horizontal |
| B | pelle de chargement |
| C | berceau mobile |
| D | traîneau d'évacuation de paquets de tuyaux |
| L | lit de tuyaux |
| M | emboîtement d'un tuyau |
| N | paquet de tuyaux |
| P | périmètre vertical d'encombrement de l'installation |
| Q | machine à cercler ou à lier les paquets N |
| R | lien de paquet |
| T | tuyau |
| U | bout uni d'un tuyau |
| I | cale entre lits superposés |
| TT | direction oblique de montée et descente de la pelle B (angle x) |
| XX | direction d'amenée des tuyaux sur le transporteur A |
| YY | direction transversale d'évacuation par le traîneau D |
| ZZ | direction oblique de montée et de descente du berceau C (angle y) |
| x | angle d'inclinaison des surfaces portantes et d'appui de la pelle B, du berceau C et du traîneau D |
| y | angle d'inclinaison de la direction ZZ de déplacement du berceau C par rapport à la verticale |
| $h_1$ | hauteur du berceau C en position haute au-dessus du traîneau D |
| $h_2$ | hauteur du berceau C en position basse en-dessous du traîneau D |
| d | écartement des dossiers du berceau C et du traîneau D en position basse du berceau C |
| f | sens d'avance des lits L sur le transporteur A |
| $f_1$ | sens d'évacuation des paquets N vers la machine à cercler Q par le traîneau D |

Transporteur A

1 bâti
2 convoyeur et chaînes
3 roues dentées
4 roues dentées de synchronisation
5 arbre
6 chaîne motrice
7 moteur
8 dents

Pelle B

9 bâti — longerons
10 chariot
11 galets
12 châssis
13 coulisseau
14 bras porteurs
14a dents d'appui
15 vérins d'avance-recul
16 supports de vérins
17 vérin de montée-descente
18 support de vérin
19 chaîne de montée-descente
20 poulie ou roue dentée de renvoi

Berceau C

21 bâti
22 paire de supports coudés
23 galets
24 grand côté oblique suivant la direction ZZ des supports coudés 22
25 surface portantes ou sièges
26 dossiers d'appui
27 vérins
28 supports de vérins

Traîneau D

29 bâti
30 galets
31 roues dentées
32 chaîne Galle
33 tablier
34 barres de guidage
35 équerres
36 sièges ou surfaces portantes
37 dossiers d'appui

**Revendications**

1. Procédé pour la confection de paquets carrés ou rectangulaires de tuyaux en fonte à emboîtement disposés tête-bêche, une extrémité de tuyau à bout uni alternant avec une extrémité à emboîtement d'un tuyau voisin, en partant de tuyaux amenés par un transporteur horizontal ou à peu près suivant une direction perpendiculaire aux axes des tuyaux pour aboutir à un paquet de tuyaux évacué par un véhicule, suivant une direction parallèle aux axes des tuyaux, ce procédé du type dans lequel on empile des lits successifs de tuyaux en un paquet sur un berceau intermédiaire qui maintient le paquet non lié par un côté; on transfère le paquet de tuyaux empilés mais non liés du berceau intermédiaire vers un véhicule d'évacuation du paquet placé au-dessous dudit berceau intermédiaire en faisant descendre obliquement le berceau intermédiaire au-dessous du véhicule d'évacuation qui retient le

0 080 063

paquet au passage et qui maintient le paquet non lié par le même côté que le berceau, l'angle d'inclinaison de la descente par rapport à la verticale ménageant un espace libre entre le berceau intermédiaire et le paquet de tuyaux tranféré sur le véhicule d'évacuation; on déplace le véhicule d'évacuation contenant un paquet de tuyaux suivant une direction parallèle aux axes des tuyaux du paquet vers une machine à cercler le paquet, l'espace libre susdit étant suffisant pour permettre le déplacement du véhicule d'évacuation d'un paquet de tuyaux sans collision des emboîtements avec le berceau intermédiaire; on relève le berceau intermédiaire en position haute de réception de nouveaux lits successifs de tuyaux avant même le retour du véhicule d'évacuation en position d'attente de chargement.

2. Procédé suivant la revendication 1 caractérisé en ce que l'on transfère chaque lit de tuyaux du transporteur horizontal vers le berceau intermédiaire en déplaçant une pelle de chargement suivant une trajectoire fermée ou un cycle comprenant une montée pour saisir un lit de tuyaux sur le transporteur horizontal, une avance en direction du berceau, une descente au-dessus du berceau pour y déposer un lit de tuyaux, et un recul pour revenir en position de repos au-dessous du transporteur horizontal.

3. Installation pour la mise en œuvre du procédé suivant la revendication 1, cette installation du type à transporteur horizontal ou à peu près horizontal de lits de tuyaux et à moyens de chargement de ces lits, en bout dudit transporteur, sur un véhicule d'évacuation à dossiers d'appui, et du type dans lequel lesdits moyens de chargement (B—C) sur le véhicule unique (D), d'évacuation d'un paquet (N) de tuyaux consistent en une pelle (B) pour prélever les lits de tuyaux sur le transporteur (A) et un berceau intermédiaire (C) à dossiers d'appui pour recevoir les lits de tuyaux de la pelle (B) et les transférer sur le véhicule unique (D), le berceau (C) étant mobile en hauteur relativement au véhicule (D) d'évacuation entre une position haute au-dessus et une position basse au-dessous de celui-ci, étant caractérisée en ce que les dossiers d'appui tant du véhicule que du berceau sont disposés d'un seul et même côté du paquet de tuyaux qui sont en fonte à emboîtement disposés tête-bêche, que le véhicule est mobile transversalement à la direction de déplacement des lits de tuyaux sur ledit transporteur, et que le berceau (C) est mobile le long d'un chemin de roulement (21) oblique à inclinaison d'angle (y) par rapport à la verticale, ledit chemin de roulement (21) étant à pente descendante dans le sens de l'approche du berceau (C) vers le véhicule (D) d'évacuation du paquet de tuyaux (N) lorsque le berceau est au-dessus du véhicule (D), et dans le sens l'éloignement du berceau (C) lorsque le berceau est au-dessous du véhicule (D), les positions du berceau (C) au-dessus et au-dessous du véhicule (D) étant telles que les dossiers d'appui du berceau (C) soient écartés de ceux du véhicule (D) respectivement en-deça et au-delà.

4. Installation suivant la revendication 3 caractérisée en ce que la pelle (B) de chargement lit par lit du berceau (C) est mobile en montée, descente, approche et recul entre une position située au-dessous de l'extrémité aval du transporteur (A) de lits de tuyaux et une position de chargement de berceau (C) située au-dessus du berceau (C).

5. Installation suivant la revendication 4 caractérisée en ce que la pelle de chargement (B) est légèrement inclinée d'un angle (x) par ses bras (14) support d'un lit (L) de tuyaux.

6. Installation suivant la revendication 4 caractérisée en ce que la pelle (B), légèrement inclinée d'un angle (x) par rapport à l'horizontale et à la verticale, comporte une paire de bras de support (14) obliques suivant un angle (x) par rapport à l'horizontale, convenablement espacés, portés par un coulisseau (13), et en ce que la pelle (B) est montée sur un chariot (10) sous l'action d'au moins un vérin (15) d'avance-recul, mobile sur un chemin de roulement (9) légèrement incliné d'un angle (x) par rapport à l'horizontale au-dessous du transporteur (A), le chariot (10) comportant un châssis (12) qui lui est perpendiculaire, donc incliné de l'angle (x) par rapport à la verticale, et qui porte ledit coulisseau (13) de manière coulissante.

7. Installation suivant la revendication 6 caractérisée en ce que le coulisseau (13) de la pelle (B) portant les bras de support (14) est fixé à l'extrémité d'une chaine (19) de traction en montée-descente dont l'autre extrémité est fixée à la tige d'un vérin (17) de montée-descente de la pelle (B), ledit vérin (17) étant monté sur le châssis (10) et ladite chaîne changeant de direction à 90° par passage sur un quart de circonférence d'une poulie ou roue dentée (20).

8. Installation suivant l'une des revendications 3 à 7 caractérisée en ce que le berceau (C) est à claire-voie et est constituée d'une paire de supports coudés, parallèles, rigides (22) en auges trapézoïdales roulant sur ledit chemin de roulement (21) oblique, convenablement espacés, et comportant un côté (24), parallèle à la direction oblique du chemin de roulement (21) suivant l'angle (y), et portant des galets (23) de roulement, chaque support coudé (22) comportant un siège (25) légèrement oblique suivant un angle (x) par rapport à l'horizontale, et un dossier d'appui (26) perpendiculaire au siège (25) et légèrement oblique de l'angle (x) par rapport à la verticale, les deux supports coudés (22) étant synchronisés dans leurs déplacements.

9. Installation suivant l'une des revendications 3 à 8 caractérisée en ce que le véhicule d'évacuation (D) est un traîneau à claire-voie comportant un tablier horizontal (33), une paire d'équerres de support (35) d'un paquet (N) de tuyaux, convenablement espacées, et légèrement inclinées d'un angle (x) par rapport à l'horizontale et à la verticale avec un siège (36) et un dossier d'appui (37).

11

10. Installation suivant la revendication 9 caractérisée en ce que le traîneau (D) d'évacuation repose sur un train de galets moteurs (30), d'axes fixes parallèles à l'axe (XX) du transporteur (A), en vue de son entraînement en translation en va-et-vient suivant une direction (YY) orthogonale à la direction (XX) d'avance des tuyaux sur le transporteur (A).

11. Installation suivant les revendications 5, 8 et 9 caractérisée en ce que l'angle (y) d'inclinaison du chemin de roulement (21) et d'un côté (24) des supports coudés (22) du berceau (C) est notablement supérieur à l'angle (x) d'inclinaison des bras de support (14) de la pelle (B), des sièges et dossiers (25—26) du berceau (C) et des sièges et dossiers (36—37) du traîneau (D).

12. Installation suivant la revendication 8 caractérisée en ce que les espacements relatifs, vus en plan, entre le transporteur (A), la pelle (B), le berceau (C) et le véhicule ou traîneau (D) sont tels que l'espacement des chaînes (2) porteuses de tuyaux pour les faire avancer sur le transporteur (A) est sensiblement inférieur à la longueur des tuyaux (T), que cet espacement des chaînes (2) du transporteur (A) est lui-même supérieur à l'espacement des supports coudés (22) du berceau (C), lui-même supérieur à l'espacement des bras (14) de la pelle (B), lui-même supérieur à la longueur du traîneau (D) et à l'espacement des équerres (35) de support des tuyaux (T) sur le traîneau (D).

13. Installation suivant la revendication 8 caractérisée en ce que le berceau (C) est mû par une paire de vérins (27) convenablement synchronisés et appliqués sur la paire de supports coudés (22), et ayant une faible course pour faire passer le berceau (C) d'une position haute située juste au-dessus du traîneau (D) à une position basse située juste en-dessous du traîneau (D).

14. Installation suivant les revendications 8 et 10 caractérisée en ce que le traîneau (D) d'évacuation des paquets (N) de tuyaux est mobile entre l'espace délimité par les supports coudés du berceau (C) et une position située au-delà d'une machine à cercler (Q), les paquets de tuyaux étant cerclés à leurs extrémités dépassant le traîneau (D).

15. Installation suivant les revendications 8 et 10 caractérisée en ce que les galets moteurs (30) supportant le traîneau (D) sont portés par un bâti (29) comportant une échancrure ou interruption pour livrer passage à l'un des supports coudés (22) du berceau (C).

16. Installation suivant les revendications 6 et 7 caractérisée en ce que les vérins (15) d'avance-recul et (17) de montée-descente de la pelle (B) sont montés respectivement sur un bâti (9) incliné d'un angle (x) par rapport à l'horizontale et sur le chariot (10) coulissant sur le bâti (9) placé à l'intérieur du bâti (1) du transporteur (A), les vérins d'avance-recul (15) étant montés directement sur les longerons du bâti (9) et appliqués sur le chariot (10) par leur tige de piston, et le vérin (17) de montée-descente étant porté par le chariot (10) qui porte également le châssis (12) de la pelle (B) et la poulie (20) de renvoi d'angle à 90°.

## Patentansprüche

1. Verfahren zum Herstellen von quadratischen oder rechteckigen Bündeln von Kopf bei Fuß angeordneten Muffenrohren aus Gußeisen, wobei ein Rohrende mit glattem Endstück mit einem Ende mit Muffe eines benachbarten Rohrs abwechselt, ausgehend von Rohren, die durch einen waagerechten Förderer ungefähr senkrecht zu den Achsen zugeführt werden, um zu einem Rohrbündel zu gelangen, das durch ein Fahrzeug parallel zu den Achsen der Rohre entnommen wird, wobei das Verfahren von der Art ist, bei der man die aufeinanderfolgenden Lagen von Rohren zu einem Bündel auf einem Zwischenkorb stapelt, der das nichtverbundene Bündel auf einer Seite hält, man das Bündel aus gestapelten nichtverbundenen Rohren des Zwischenkorbs zu einem unter dem Zwischenkorb angeordneten Entnahmefahrzeug für das Bündel verlagert durch schräges Absenken des Zwischenkorbs unter das Entnahmefahrzeug, welches das Bündel beim Durchgang hält und welches das nichtverbundene Bündel mit derselben Seite wie der Korb hält, wobei der Neigungswinkel des Absenkens gegenüber dem Fahrzeug einen freien Raum zwischen dem Zwischenkorb und dem auf das Entnahmefahrzeug verlagerten Rohrbündel bildet, man das ein Rohrbündel enthaltende Entnahmefahrzeug parallel zu den Achsen der Rohre des Bündels zu einer Maschine zum Umschnüren des Bündels bewegt, wobei der genannte freie Raum genügt, um die Bewegung des Entnahmefahrzeugs für ein Rohrbündel ohne Zusammenstoßen der Muffen mit dem Zwischenkorb zu ermöglichen, man den Zwischenkorb in eine hohe Aufnahmestellung für neue aufeinanderfolgende Lagen von Rohren vor der Rückkehr des Entnahmefahrzeugs in die Wartestellung für das Beladen hebt.

2. Verfahren nach Anspruch 1, dadurch gekennzeichnet, daß man jede Lage von Rohren des waagerechten Förderers zum Zwischenkorb verlagert durch Bewegen eines Ladegreifers längs einer geschlossenen Bahn oder eines Kreislaufs mit folgendem: einem Anstieg zum Ergreifen einer Lage von Rohren auf dem waagerechten Förderer, einem Vorschub in Richtung des Korbs, einem Absenken über den Korb, um dort eine Lage von Rohren abzulegen, und einem Rücklauf, um in die Ruhestellung unter dem waagerechten Förderer zurückzugelangen.

3. Vorrichtung zum Durchführen des Verfahrens nach Anspruch 1, wobei diese Vorrichtung von der Bauart ist, mit waagerechten oder ungefähr waagerechten Rohrlagen und mit am Ende dieses Förderers angeordneten Mitteln zum Laden dieser Lagen auf ein Entnahmefahrzeug mit Anlageschenkeln, und von der Bauart ist, bei der die Mittel (B, C) zum Laden eines Bündels (N) aus Rohren auf ein einziges Entnahmefahrzeug (D) aus folgendem bestehen: einem Greifer (B) zum Entnehmen der Rohrbündel auf dem Förderer (A) und einem Zwischenkorb (C) mit Anlageschenkeln zum Aufnehmen der Rohrlagen vom Greifer (B) und zum Verlagern der Rohrlagen auf das einzige Fahrzeug (D), wobei der Korb (C) in der Höhe gegenüber dem Entnahmefahrzeug (D) bewegbar ist zwischen einer hohen Stellung über und einer tiefen Stellung unter diesem, dadurch gekennzeichnet, daß die Anlageschenkel des Fahrzeugs und des Korbs auf ein und derselben Seite des Bündels aus Rohren angeordnet sind, die aus Gußeisen bestehen und Kopf bei Fuß angeordnete Muffenrohre sind, daß das Fahrzeug quer zur Bewegungsrichtung der Rohrlagen auf dem Förderer bewegbar ist und daß der Korb (C) längs einer schrägen Rollbahn (21) unter einem Neigungswinkel (y) gegenüber der Senkrechten bewegbar ist, wobei die Rollbahn (21) eine abfallende Neigung hat: im Sinn des Näherns des Korbs (C) zum Fahrzeug (D) zur Aufnahme des Rohrbündels (N), wenn sich der Korb über dem Fahrzeug (D) befindet, und im Sinn des Entfernens des Korbs (C), wenn sich der Korb unter dem Fahrzeug (D) befindet, wobei die Positionen des Korbs (C) über und unter dem Fahrzeug (D) von der Art sind, daß die Anlageschenkel des Korbs (C) von den diesseits bzw. jenseits gelegenen Anlageschenkeln des Fahrzeugs (D) entfernt sind.

4. Vorrichtung nach Anspruch 3, dadurch gekennzeichnet, daß der Greifer zum lageweisen Beladen des Korbs (C) beweglich ist bezüglich des Anzeigens, Absenkens, Näherns und Zurückbewegen zwischen einer Position unter dem in Bewegungsrichtung abwärtsgelegenen Ende des Förderers (A) für Rohrlagen und einer über dem Korb befindlichen Position für das Beladen des Korbs (C).

5. Vorrichtung nach Anspruch 4, dadurch gekennzeichnet, daß der Ladegreifer (B) mit seinen Tragarmen (14) für Rohrlagen (L) unter einem Winkel (x) leicht geneigt ist.

6. Vorrichtung nach Anspruch 4, dadurch gekennzeichnet, daß der gegenüber der Waagerechten und der Senkrechten unter einem Winkel (x) leicht geneigte Greifer (B) zwei Tragarme (14) aufweist, die gegenüber der Waagerechten unter einem Winkel (x) schräg verlaufen, geeignet beabstandet sind und von einem Schlitten (13) getragen werden, und daß der Greifer (B) an einem Wagen (10) befestigt, der der Wirkung eines Stellzylinders (15) für den Vorschub und Rücklauf ausgesetzt und auf einer unter dem Förderer (A) befindlichen Rollbahn (9) bewegbar ist, die gegenüber der Waagerechten unter einem Winkel (x) geneigt ist, wobei der Wagen (10) einen Rahmen (12) aufweist, der zu ihm senkrecht und somit gegenüber der Senkrechten unter dem Winkel (x) geneigt ist und der den Schlitten (13) trägt.

7. Vorrichtung nach Anspruch 6, dadurch gekennzeichnet, daß der Schlitten (13) des die Tragarme (14) tragenden Greifers (B) am Ende einer Zugkette (15) für das Anheben und Absenken befestigt ist, deren anderen Ende an der Stange eines Stellzylinders (17) für das Anheben und Absenken des Greifers (B) befestigt ist, wobei der Stellzylinder (17) am Rahmen (10) befestigt ist und die Kette bei ihrem Umlauf um einen viertel Umfang einer Rolle oder eines Zahnrads (20) ihre Richtung um 90° ändert.

8. Vorrichtung nach Anspruch 3 bis 7, dadurch gekennzeichnet, daß der Korb (C) durchsichtig ist und aus zwei abgewinkelten parallelen und starren Trägern (22) aus trapezförmigen Rinnen besteht, die auf der schrägen Rollbahn (21) rollen, geeignet beabstandet sind, eine Seite (24) aufweisen, die zu der schrägen Richtung der unter einem Winkel (y) angeordneten Rollbahn parallel ist, und Laufrollen (23) tragen, wobei jeder abgewinkelte Träger (22) einen gegenüber der Senkrechten unter einem Winkel (x) leicht geneigten Sitz (25) und einen Anlageschenkel (26) aufweist, wobei die beiden abgewinkelten Träger (22) in ihren Bewegungen synchronisiert sind.

9. Vorrichtung nach einem der Ansprüche 3 bis 8, dadurch gekennzeichnet, daß das Entnahmefahrzeug (D) ein durchsichtiger Schlitten ist mit einer waagerechten Platte (33) und mit zwei Tragwinkeln (35) für ein Rohrbündel (N), wobei die Tragwinkel geeignet beabstandet sind, unter einem Winkel (x) gegenüber der Waagerechten und der Senkrechten leicht geneigt sind und einen Sitz (36) sowie einen Anlageschenkel (37) aufweisen.

10. Vorrichtung nach Anspruch 9, dadurch gekennzeichnet, daß der Entnahmeschlitten (D) auf einer Anzahl von Antriebsrollen (30) mit feststehenden und zur Achse (XX) des Förderers (A) parallelen Achsen ruht zu seinem hin- und hergehenden translatorischen Antrieb in einer Richtung (YY), die zur Vorschubrichtung (XX) der auf dem Förderer (A) liegenden Rohre senkrecht ist.

11. Vorrichtung nach Anspruch 5, 8 und 9, dadurch gekennzeichnet, daß der Neigungswinkel (y) der Rollbahn (21) und einer Seite (24) der abgewinkelten Träger (22) des Korbs (C) merklich größer ist als der Neigungswinkel (x) der Tragarme (14) des Greifers (B), der Sitz und Schenkel (25, 26) des Korbs (C) und der Sitz und Schenkel (36, 27) des Schlittens (D).

12. Vorrichtung nach Anspruch 8, dadurch gekennzeichnet, daß in der Draufsicht die gegenseitigen Abstände zwischen dem Förderer (A), dem Greifer (B), dem Korb (C) und dem Fahrzeug oder Schlitten (D) so groß sind, daß der Abstand der Tragketten (2) für die Rohre zu deren Vorschub auf dem Förderer (A) merklich kleiner als die Länge der Rohre (T) ist, wobei dieser Abstand der Ketten (2) des Förderers (A) seinerseits größer ist als der Abstand der abgewinkelten Träger (22) des Korbs (C), seinerseits größer ist als der Abstand der Arme (14) des Greifers (B) und seinerseits größer ist als die Länge des Schlittens (D) und als der Abstand der Winkel (35) zum Tragen der Rohre (T) auf dem Schlitten (D).

13. Vorrichtung nach Anspruch 8, dadurch gekennzeichnet, daß der Korb (C) durch zwei Stellzylinder (27) bewegt wird, die geeignet synchronisiert sind, an den beiden abgewinkelten Trägern (22) angreifen und einen geringen Hub haben, um den Korb (C) von einer hohen Stellung genau über dem Schlitten (D) in eine tiefe Stellung genau unter dem Schlitten zu bewegen.

14. Vorrichtung nach Anspruch 8 und 10, dadurch gekennzeichnet, daß der Schlitten (D) zum Entnehmen der Rohrbündel (N) bewegbar ist zwischen dem durch die abgewinkelten Träger des Korbs (C) begrenzten Raum und einer Position jenseits einer Umschnürungsmaschine (Q), wobei die Rohrbündel an ihren über den Schlitten (D) hinaus ragenden Enden umschnürt werden.

15. Vorrichtung nach Anspruch 8 und 10, dadurch gekennzeichnet, daß die den Schlitten (D) tragenden Antriebsrollen (30) auf einem Gestell (29) getragen werden, das eine Ausnehmung oder Unterbrechung aufweist, um für einen abgewinkelten Träger (22) des Korbs (C) einen Durchtritt frei zu lassen.

16. Vorrichtung nach Anspruch 6 und 7, dadurch gekennzeichnet, daß die Stellzylinder (15) für den Vorschub und den Rücklauf sowie (17) für das Anheben und Absenken des Greifers (B) befestigt sind: auf einem Gestell (9), das unter einem Winkel (x) gegenüber der Waagerechten geneigt ist, bzw. auf einem Wagen (10), der auf dem Gestell (9) verschiebbar ist, das sich innerhalb des Gestells (1) des Förderers (A) befindet, wobei die Stellzylinder (15) für den Vorschub und Rücklauf unmittelbar auf den Längsträger des Gestells (9) befestigt und durch ihre Kolbenstange am Wagen (10) angeschlossen sind, und wobei der Stellzylinder (17) für das Anheben und Absenken vom Wagen (10) getragen wird, der ebenfalls den Rahmen (12) des Greifers (B) und die 90°-Umlenkrolle (20) trägt.

## Claims

1. Method for making up square or rectangular piles of cast-iron pipes comprising a socket arranged top to bottom, the smooth end of one pipe alternating with the socket end of an adjacent pipe, starting with pipes supplied by a horizontal conveyor or roughly in a direction perpendicular to the axes of the pipes in order to lead to a pile of pipes discharged by a vehicle, in a direction parallel to the axes of the pipes, this method of the type in which successive layers of pipes are stacked in a pile on an intermediate cradle which holds the unconnected pile in position by one side; the pile of stacked but unconnected pipes is transferred from the intermediate cradle to a vehicle for the discharge of the pile located below the said intermediate cradly by lowering the intermediate cradle obliquely below the discharge vehicle which retains the pile as it passes and which keeps the unconnected pile in position by the same side as the cradle, the angle of inclination of the descent with repect to the vertical providing a free space between the intermediate cradle and the pile of pipes transferred to the discharge vehicle; the discharge vehicle containing a pile of pipes is moved in a direction parallel to the axes of the pipes of the pile towards a machine for surrounding the pile with bands, the said free space being sufficient to allow the movement of the vehicle for discharging a pile of pipes without any collision of the sockets with the intermediate cradle; the intermediate cradle is raised into an upper position for receiving successive new layers of pipes even before the return of the discharge vehicle to the position awaiting loading.

2. Method according to claim 1, characterised in that each layer of pipes is transferred from the horizontal conveyor to the intermediate cradle by moving a loading shovel along a closed trajectory or a cycle comprising an ascending movement for taking hold of a layer of pipes on the horizontal conveyor, a forward movement in the direction of the cradle, a descending movement above the cradle, in order to deposit a layer of pipes thereon and a withdrawal movement for returning to the inoperative position below the horizontal conveyor.

3. Installation for carrying out the method according to claim 1, this installation of the type comprising a horizontal or roughly horizontal conveyor for layers of pipes and means for loading these layers, at the end of the said conveyor, onto a discharge vehicle comprising support backs and of the type in which the said loading means (B—C) on the single vehicle (D) for the discharge of a pile (N) of pipes consist of a shovel (B) for removing the layers of pipes from the conveyor (A) and an intermediate cradle (C) comprising support backs for receiving the layers of pipes from the shovel (B) and transferring them to the single vehicle (D), the cradle (C) being able to move vertically relative to the discharge vehicle (D) between an upper position above the latter and a lower position below the latter, being characterised in that the support backs both of the vehicle and of the cradle are arranged on only one and the same side of the pile of pipes which are made from cast-iron comprising a socket and arranged top to bottom, that the vehicle is able to move transversely with repect to the direction of movement of the layers of pipes on the said conveyor and that the cradle (C) is able to move along an oblique track (21) having an angle of inclination (y) with respect to the vertical, the said track (21) having a downward slope in the direction in which the cradle (C) approaches the vehicle (D) for the discharge of the pile of pipes (N) when the cradle is above the vehicle (D) and in the departing direction of the cradle (C) when the cradle is below the vehicle (D), the positions of the cradle (C) above and below the vehicle (D) being such that the support backs of the cradle (C) are moved away

0 080 063

from those of the vehicle (D) respectively on this side and beyond.

4. Installation according to claim 3, characterised in that the shovel (B) for loading the cradle (C) layer by layer is able to move up, down, forwards and backwards between a position situated below the downstream end of the conveyor (A) for layers of pipes and a position for loading the cradle (C) situated above the cradle (C).

5. Installation according to claim 4, characterised in that the loading shovel (B) is slightly inclined by an angle (x) by its arms (14) for supporting a layer (L) of pipes.

6. Installation according to claim 4, characterised in that the shovel (B), slightly inclined by an angle (x) with respect to the horizontal and to the vertical comprises a pair of support arms (14) which are oblique by an angle (x) with respect to the horizontal, suitably spaced, supported by a slide (13) and in that the shovel (B) is mounted on a carriage (10) under the action of at least one jack (15) moving back and forth able to move on a track (9) slightly inclined by an angle (x) with respect to the horizontal below the conveyor (A), the carriage (10) comprising a frame (12) which is perpendicular thereto, thus inclined by the angle (x) with respect to the vertical and which supports the said slide (13) in a sliding manner.

7. Installation according to claim 6, characterised in that the slide (13) of the shovel (B) carrying the support arms (14) is fixed to the end of a pulling chain (19) moving up and down whereof the other end is fixed to the rod of a jack (17) for the ascent and descent of the shovel (B), the said jack (17) being mounted on the frame (10) and the said chain changing direction by 90° by passing over a quarter of the circumference of a pulley or toothed wheel (20).

8. Installation according to one of claims 3—7, characterised in that the cradle (C) is open and is constituted by a pair of rigid, parallel, bent supports (22) in the form of trapezoidal troughs travelling on the said oblique track (21), the supports being suitably spaced, and comprising one side (24) parallel to the oblique direction of the track (21) at the angle (y) and supporting wheels (23), each bent support (22) comprising a seat (25) which is slightly oblique at an angle (x) with respect to the horizontal and a support back (26) perpendicular to the seat (25) and slightly oblique by the angle (x) with respect to the vertical, the two bent supports (22) being synchronised in their movements.

9. Installation according to one of claims 3 to 8, characterised in that the discharge vehicle (D) is an open sleigh comprising a horizontal apron (33) a pair of support brackets (35) for a pile (N) of pipes, suitably spaced and slightly inclined by an angle (x) with respect to the horizontal and to the vertical with a seat (36) and a support back (37).

10. Installation according to claim 9, characterised in that the discharge sleigh (D) rests on a set of drive rollers (30), with fixed shafts parallel to the axis (XX) of the conveyor (A), for the purpose of its reciprocating translatory entrainment in a direction (YY) at right angles to the direction (XX) of forwards movement of the pipes on the conveyor (A).

11. Installation according to claims 5, 8 and 9, characterised in that the angle (y) of inclination of the track (21) and of one side (24) of the bent support (22) of the cradle (C) is appreciably greater than the angle (x) of inclination of the support arms (14) of the shovel (B), of the seats and backs (25—26) of the cradle (C) and of the seats and backs (36—37) of the sleigh (D).

12. Installation according to claim 8, characterised in that the relative spacings, seen in plan, between the conveyor (A), the shovel (B), the cradle (C) and the vehicle of sleigh (D) are such that the spacing of the chains (2) supporting pipes for moving them forwards on the conveyor (A) is substantially less than the length of the pipes (T), that this spacing of the chains (2) of the conveyor (A) is itself greater than the spacing of the bent supports (22) of the cradle (C) itself greater than the length of the sleigh (D) and the spacing of the brackets (35) for supporting the pipes (T) on the sleigh (D).

13. Installation according to claim 8, characterised in that the cradle (C) is moved by a pair of jacks (27) suitably synchronised and applied to the pair of bent supports (22) and having a small stroke in order to move the cardle (C) from an upper position situated just above the sleigh (D) to a lower position situated just below the sleigh (D).

14. Installation according to claims 8 and 10, characterised in that the sleigh (D) for the discharge of piles (N) of pipes is able to move between the space defined by the bent supports of the cradle (C) and a position situated beyond a machine (Q) for applying bands, the band being placed around the piles of pipes at their ends projecting beyond the sleigh (D).

15. Installation according to claims 8 and 10, characterised in that the drive rollers (30) supporting the sleigh (D) are supported by a frame (29) comprising a notch or interruption for allowing the passage of one of the bent supports (22) of the cradle (C).

16. Installation according to claims 6 and 7, characterised in that the jacks (15) for the forwards and backwards movement and the jacks (17) for the ascending and descending movement of the shovel (B) are mounted respectively on a frame (9) inclined by an angle (x) with respect to the horizontal and on the carriage (10) sliding on the frame (9) placed inside the frame (1) of the conveyor (A), the jacks (15) for the forwards and backwards movement being mounted directly on the longitudinal beams of the frame (9) and pressed against the carriage (10) by their piston rod and the jack (17) for the ascending and descending movement being supported by the carriage (10) which also supports the frame (12) of the shovel (B) and the pulley (20) for deflection by an angle of 90°.

15

Fig.1

Fig. 2

Fig. 6

Fig. 3

Fig. 5

Fig. 4

0 080 063

**Fig. 7**

**Fig. 8**

Fig. 9

0 080 063

Fig.11

Fig.10